# EUROPÄISCHE PATENTANMELDUNG

(11) **EP 1 209 134 A1**
(43) Veröffentlichungstag der Anmeldung: **29.05.2002**
(21) Anmeldenummer: 01109914.0
(22) Anmeldetag: 24.04.2001
(51) Int. Cl.: C04B 28/00, C04B 20/10, B44C 3/04, C09D 1/00

(54) **Dekormaterial**

(30) Priorität: 24.11.2000 DE 20020012 U
(71) Anmelder: EuroSand GmbH, 92665 Altenstadt (DE)
(72) Erfinder: Hoyer, Manfred, 92660 Neustadt (DE)
(74) Vertreter: Graf, Helmut, Dipl.-Ing.

(57) **Zusammenfassung**

Ein Dekomaterial besteht aus einer Mischung aus einem farbigen Sand und einem anorganischen Bindemittel mit Zusatz von Wasser, wobei der Anteil an Wasser so gewählt ist, daß sich eine knetbare Masse ergibt.

## Beschreibung

Die Erfindung bezieht sich auf ein Dekomaterial gemäß Oberbegriff Schutzanspruch 1 oder 5.

Aufgabe der Erfindung ist es, ein neuartiges Dekomaterial aufzuzeigen, welches vielseitig verwendbar ist. Zur Lösung dieser Aufgabe ist ein Dekomaterial entsprechend dem Schutzanspruch 1 oder 5 ausgebildet.

Das erfindungsgemäße Dekomaterial ist beispielsweise ein Knetsand, bestehend aus einem farbigen Sand mit einem Bindemittel, vorzugsweise einem anorganischen Bindemittel in Form von Ton und/oder Bentonit. Der verwendete Sand besitzt beispielsweise eine natürliche Färbung oder ist unter Verwendung von Pigmenten und einem Kunststoff gefärbt. Der Wasseranteil des Knetsandes ist so gering gewählt, daß dieser eine knetbare Konsistenz besitzt.

Der Knetsand ermöglicht ein Formen oder Modellieren und härtet in einer gewissen Zeit, beispielsweise innerhalb von 24 Stunden aus. Durch Zugabe von Wasser ist der Knetsand dann in seine knetbare Konsistenz rückführbar.

Entsprechend einer weiteren Ausbildung der Erfindung ist das Dekomaterial ein Muschelgranulat, d.h. ein Granulat bestehend aus gebrochenen Muscheln, die dann unter Verwendung von in Kunststoff eingebetteten Farbstoffen oder Farbpigmenten eingefärbt sind.

Als Kunststoff eignet sich hierbei ein dünnflüssiger, schnell aushärtender Kunststoff, vorzugsweise ein Kunststoff, der durch Mischen zweier Komponenten aushärtet, mit dem Vorteil, daß das Einfärben durch einfaches Mischen des Sandes oder des Muschelgranulats in einem umlaufenden Mischer mit dem Kunststoff und den Farbpigmenten erfolgen kann.

Die Erfindung wurde voranstehend an Ausführungsbeispielen beschrieben. Es versteht sich, daß Änderungen sowie Abwandlungen möglich sind, ohne daß dadurch der der Erfindung zugrundeliegende Erfindungsgedanke verlassen wird.

## Patentansprüche

1. Dekomaterial, **gekennzeichnet durch** eine Mischung aus einem farbigen Sand und einem anorganischen Bindemittel mit Zusatz von Wasser, wobei der Anteil an Wasser so gewählt ist, daß sich eine knetbare Masse ergibt.

2. Dekomaterial nach Anspruch 1, **dadurch gekennzeichnet, daß** das Bindemittel Ton, beispielsweise Bentonit ist.

3. Dekomaterial nach Anspruch 1 oder 2, **dadurch gekennzeichnet, daß** der Sand ein gefärbter Sand ist.

4. Dekomaterial nach Anspruch 3, daß der Sand unter Verwendung von Pigmenten und eines schnell aushärtenden Kunststoffs gefärbt ist.

5. Dekomaterial, **gekennzeichnet durch** Muschelgranulate, welches unter Verwendung von Farbstoffen oder Pigmenten und eines diese Pigmente einbindenden, schnell abbindenden Kunststoff gefärbt ist.

6. Dekomaterial nach einem der vorhergehenden Ansprüche, **dadurch gekennzeichnet, daß** der Kunststoff ein Zweikomponenten Kunststoff ist.
